# EUROPÄISCHE PATENTSCHRIFT

(11) **EP 3 960 973 B1**
(45) Veröffentlichungstag und Bekanntmachung des Hinweises auf die Patenterteilung: **28.02.2024**
(21) Anmeldenummer: 21184057.4
(22) Anmeldetag: 06.07.2021
(51) Int. Cl.: E05D 13/00, B60J 5/14, E05D 15/24

(54) **FAHRZEUGAUFBAU**
VEHICLE SUPERSTRUCTURE
CARROSSERIE DE VÉHICULE

(30) Priorität: 25.08.2020 DE 102020122203
(43) Veröffentlichungstag der Anmeldung: 02.03.2022
(73) Patentinhaber: WIHAG Fahrzeugbausysteme GmbH, 33602 Bielefeld (DE)
(72) Erfinder: KRAUS, Alexander, 33818 Leopoldshöhe (DE)
(74) Vertreter: Dantz, Jan Henning

(56) Entgegenhaltungen:
- WO-A1-2019/072654
- US-A1- 2012 125 545

## Beschreibung

Die vorliegende Erfindung betrifft einen Fahrzeugaufbau mit einem zwischen zwei Pfosten angeordneten Sektionaltor, das zum Öffnen und Schließen einer Öffnung eines Laderaumes bewegbar ist und eine Vielzahl von verschwenkbar aneinander gelagerten Paneelen aufweist, die an gegenüberliegenden Seiten über Führungsmittel entlang einer Führung bewegbar sind, die im Bereich der Öffnung einen im Wesentlichen vertikalen Abschnitt, im oberen Bereich des Laderaums einen im Wesentlichen horizontalen Abschnitt als Speicherabschnitt für das Sektionaltor und dazwischen einen bogenförmigen Abschnitt aufweist, wobei eine Federwelle zum Vorspannen des Sektionaltores in eine Öffnungsposition vorgesehen ist, wobei das in einer geschlossenen Position bodenseitig angeordnete untere Paneel verschwenkbar an einem entlang der Führung bewegbaren Laufteil gehalten ist. wobei die Pfosten im oberen Bereich über einen Sturz oder einen Balken miteinander verbunden sind.

Die DE 20 2015 105 844 U1 offenbart einen Fahrzeugaufbau, bei dem ein Laderaum durch ein bewegbares Sektionaltor verschließbar ist. Das Sektionaltor umfasst eine Vielzahl von gelenkig miteinander verbundenen Paneelen, die über eine Federwelle in eine Öffnungsposition vorgespannt sind. An der Federwelle ist auch eine Federbruchsicherung vorgesehen. Wenn das Sektionaltor in die Öffnungsposition verfahren wurde, steht das unterste Paneel des Sektionaltores meist noch in die Öffnung hervor und ist in dem bogenförmigen Abschnitt der Führung angeordnet. Dadurch wird die Öffnungshöhe zum Be- und Entladen des Laderaums durch das unterste Paneel begrenzt.

In der US 2015/0083348 A1 ist ein Sektionaltor mit plattenförmigen Paneelen an einem Fahrzeug offenbart, bei dem an einer Außenseite des untersten Paneels ein Seilzug über einen Halter fixiert ist. Das unterste Paneel ist an gegenüberliegenden Seiten jeweils über einen Laufwagen an einer Führung verfahrbar, wobei die Führung einen verschwenkbaren Hebel aufweist, so dass in der hochgezogenen Position eine untere Kante des unteren Paneels höher angeordnet ist als die Führung.

Ein ähnliches Sektionaltor mit plattenförmigen Paneelen und einer verschwenkbaren Führung für das unterste Paneel zeigt auch die US 2012/0125545 A1.

Es ist daher Aufgabe der vorliegenden Erfindung, einen Fahrzeugaufbau zu schaffen, bei dem die Öffnungshöhe vergrößert wird und das einfach zu bedienen ist.

Diese Aufgabe wird mit einem Fahrzeugaufbau mit den Merkmalen des Anspruches 1 gelöst.

Bei dem erfindungsgemäßen Fahrzeugaufbau sind die verschwenkbar aneinander gelagerten Paneele entlang einer Führung bewegbar, wobei das in einer geschlossenen Position bodenseitig angeordnete untere Paneel an seiner im bogenförmigen Abschnitt radial äußeren Seite eine Führungsrolle aufweist, die an einem Sturz oder einem Balken an der Oberseite der Öffnung abrollbar ist. Alternativ oder zusätzlich kann auch an dem Sturz oder Balken mindestens eine Führungsrolle gehalten sein, die an dem unteren Paneel abrollbar ist, wenn dieses an dem bogenförmigen Abschnitt angeordnet ist. Dadurch wird ein Anschlagen einer äußeren Seite des unteren Paneels an dem Balken oder dem Sturz verhindert und das untere Paneel kann leichtgängig bis in die maximale Öffnungsposition verfahren werden. Die mindestens eine Führungsrolle ist zwischen dem Sturz oder Balken einerseits und dem unteren Paneel andererseits angeordnet.

Vorzugsweise sind über die Länge des unteren Paneels verteilt mehrere Führungsrollen angeordnet oder fixiert, so dass das Paneel an mehreren Stellen gleichzeitig abgestützt ist und durch die Führungsrollen entlang des Balkens oder des Sturzes bewegbar ist. Über die Führungsrollen wird ein Spalt zwischen dem unteren Paneel und der Stutz oder Balken definiert, in dem andere Aufbauten angeordnet werden können, wie Betätigungshilfen, beispielsweise ein Griff, Schlaufen oder eine Verriegelung oder ein Schloss.

Bei dem Fahrzeugaufbau ist in der geschlossenen Position des Sektionaltores vorzugsweise ein Sturz oder ein Balken oben an dem Sektionaltores angeordnet, wobei das Sektionaltor in einer Öffnungsposition mit horizontaler Blickrichtung vorzugsweise vollständig hinter dem Sturz oder dem Balken angeordnet ist. Dadurch wird die maximale Öffnungshöhe an dem Laderaum durch die untere Kante des Sturzes oder des Balkens vorgegeben, und das Sektionaltor kann mit dem unteren Paneel höher oder im Wesentlichen auf gleicher Höhe mit dem unteren Ende des Sturzes angeordnet sein.

Das Laufteil umfasst dabei einen Befestigungsabschnitt, der an dem Paneel fixiert ist, und einen verschwenkbar an dem Befestigungsabschnitt gehaltenen Führungsabschnitt, der über eine Laufrolle oder ein Gleitelement entlang der Führung verfahrbar ist. Das Laufteil kann somit als zweiarmiger Gelenkhebel ausgebildet sein, der einerseits an dem Paneel fixiert ist und andererseits entlang der Führung verfahrbar. Das untere Paneel ist vorzugsweise an gegenüberliegenden Seiten über ein solches Laufteil entlang einer Führung bewegbar. Für einen kompakten Aufbau weist das untere Paneel eine Nut auf, in die ein Teil des Führungsabschnittes mit einem Halter für die Laufrolle einfügbar ist.

Die Paneele sind vorzugsweise aus ein oder mehreren extrudierten Profilen hergestellt, insbesondere aus Kunststoff oder Metall, so dass eine integral in das Profil eingebrachte Nut zur Fixierung des Halters für die Laufrolle genutzt werden kann. Optional weist das Profil auch ein oder mehrere Hohlkammern für eine hohe Verwindungssteifigkeit auf. Dadurch ist der Halter zwischen einer durch die äußere Oberfläche des Paneels gebildeten äußeren Ebene und einer durch eine innere Oberfläche des Paneels gebildeten inneren Ebene an dem Paneel fixiert.

Vorzugsweise ist das untere Paneel in einer Öffnungsposition des Sektionaltores an dem bogenförmigen Abschnitt der Führung angeordnet, und das untere Paneel ist mit einem unteren Ende höher angeordnet als ein unteres Ende des Laufteils. Das untere Paneel kann somit in der Öffnungsposition abweichend von der Führung höher positioniert werden, um die maximale Öffnungshöhe zum Be- und Entladen zu vergrößern.

Das untere Paneel ist vorzugsweise über ein Federelement in die angehobene Position vorgespannt ist. Dadurch kann die Bewegungsbahn des unteren Paneels an dem bogenförmigen Abschnitt genauer gesteuert werden. Das Federelement kann dabei mit einem ersten Teil an dem Führungsabschnitt und mit einem zweiten Teil an dem Befestigungsabschnitt des Laufteils abgestützt sein.

Vorzugsweise ist an dem unteren Paneel ein Zugelement fixiert, mit dem das Sektionaltor über die Federwelle in eine Öffnungsposition bewegbar ist. Dadurch wird das untere Paneel über das Zugelement, beispielsweise einen Seilzug, im Bereich des bogenförmigen Abschnittes der Führung automatisch relativ zu der Führung verschwenkt, ohne dass weitere Bauteile, wie Federn oder Antriebe, vorgesehen werden müssten. Durch das Ziehen an dem Zugelement wird das untere Paneel höher angeordnet als der verschwenkbare Führungsabschnitt des Laufteils.

An dem unteren Paneel ist in einer bevorzugten Ausgestaltung ein Betätigungselement, beispielsweise ein Griff oder eine Schlaufe, zum Bewegen des Sektionaltores von der Öffnungsposition in die Schließposition fixiert. Der Benutzer kann dann beispielsweise das Sektionaltor über das Betätigungselement nach unten ziehen, bis das Sektionaltor über ein Schloss in einer Schließposition verriegelt wird, das ebenfalls an dem unteren Paneel fixiert sein kann.

An dem Laufteil ist vorzugsweise ein gestuft ausgebildeter Halter vorgesehen, an dem an einem Ende eine Laufrolle drehbar gelagert ist und an dessen anderem Ende der Halter beispielsweise in eine Öffnung an dem Führungsabschnitt des Laufteils eingesteckt ist. Dadurch kann der Halter in einem mittleren Bereich des unteren Paneels fixiert werden, während die Laufrolle beabstandet von der Öffnung in Richtung einem unteren Ende der Führung angeordnet ist. Dies ermöglicht eine stabile Fixierung des Halters in einem mittleren Bereich des unteren Paneels und gleichzeitig eine Anordnung der unteren Laufrolle im Bereich einer Unterkante des unteren Paneels für eine optimierte Führung.

In einer Öffnungsposition des Sektionaltores kann ein unteres Ende des Paneels mindestens 5 mm, vorzugsweise zwischen 10 mm bis 50 mm, höher angeordnet sein als eine Laufrolle an dem Laufteil. In einer Schließposition kann sich die Laufrolle an dem Laufteil dabei in Verlängerung des unteren Paneels befinden.

Die Erfindung wird nachfolgend anhand eines Ausführungsbeispiels mit Bezug auf die beigefügten Zeichnungen näher erläutert. Es zeigen:
- Figur 1: eine perspektivische Ansicht eines erfindungsgemäßen Fahrzeugaufbaus;
- Figur 2: eine Ansicht der Führung des Sektionaltores an dem Fahrzeugaufbau;
- Figur 3: eine geschnittene Detailansicht des untersten Paneels des Sektionaltores in einer Öffnungsposition;
- Figur 4: eine perspektivische Ansicht eines modifizierten Ausführungsbeispiels eines Laufteils in der montierten Position;
- Figur 5: eine Explosionsdarstellung des Laufteils der Figur 7;
- Figuren 6A und 6B: zwei Ansichten einer Führungsrolle für das untere Paneel, und
- Figur 7: eine Ansicht des unteren Paneels mit zwei Führungsrollen.

Ein Fahrzeugaufbau 1 umfasst ein Sektionaltor 2, das eine Vielzahl von gelenkig miteinander verbundenen Paneelen 3 aufweist, die in einer Schließposition eine Öffnung eines Laderaums überdecken. In der Schließposition ist ein bodenseitig angeordnetes unteres Paneel 4 über ein Schloss 5 verriegelt, das das Sektionaltor 2 an einem Boden eines Fahrzeuges fixiert.

Das Sektionaltor 2 ist zwischen zwei Pfosten 6 angeordnet, die im oberen Bereich über einen Sturz 7 oder einen Balken miteinander verbunden sind und die maximale Öffnung zu dem Laderaum vorgeben. Das Sektionaltor 2 kann von einer im Wesentlichen vertikalen Schließposition in eine horizontale Öffnungsposition verfahren werden, in der das Sektionaltor 2 unterhalb eines Daches 9 angeordnet ist.

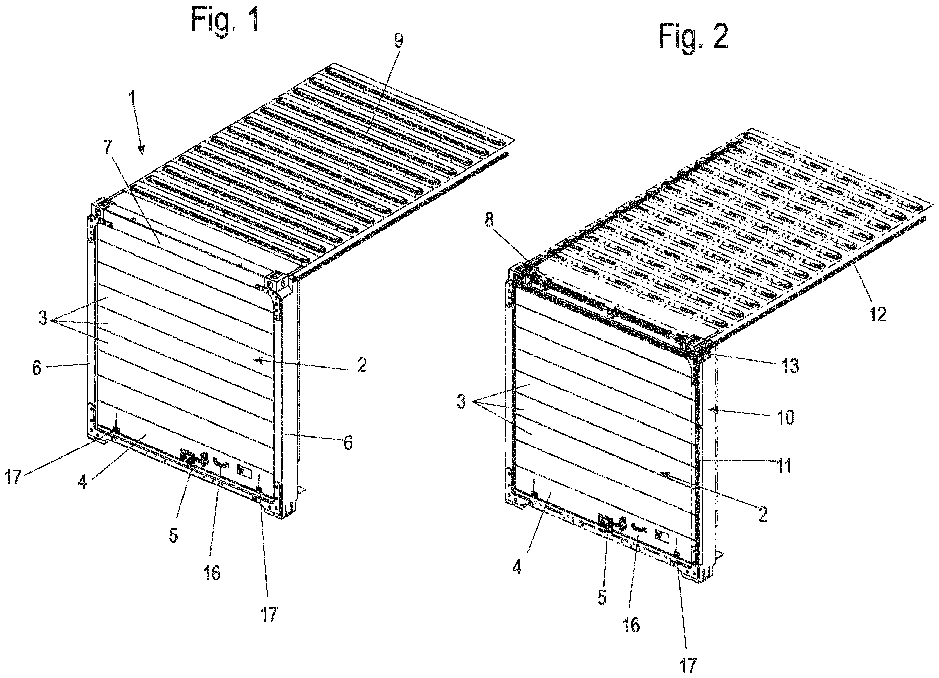

In Figur 2 ist die Führung 10 für das Sektionaltor 2 gezeigt, wobei weitere Konstruktionsteile des Fahrzeugaufbaus weggelassen wurden. An beiden Seiten des Sektionaltores 2 ist eine Führung 10 vorgesehen, die einen vertikalen Abschnitt 11 benachbart zu der Öffnung aufweist, einen horizontalen Abschnitt zum Speichern des Sektionaltores 2 in einer Öffnungsposition sowie einen bogenförmigen Abschnitt 13 zwischen dem vertikalen Abschnitt 11 und dem horizontalen Abschnitt 12. Die Führung 10 kann durch einzelne Schienenabschnitte gebildet sein, an denen Führungsmittel, wie Laufrollen oder Gleitelemente, geführt sind. An dem unteren Paneel 4 ist ein Griff 16 und Seilzuganker 17 fixiert, die jeweils über einen Seilzug mit einer Federwelle 8 verbunden sind.

Das Sektionaltor 2 ist über eine in der Schließposition oberhalb des Sektionaltores 2 angeordnete Federwelle 8 bewegbar, die über ein Zugelement das Sektionaltor 2 in eine Öffnungsposition vorspannt. Die Federwelle 8 kann beispielsweise so ausgebildet sein, wie dies in der DE 20 2015 105 884 U1 beschrieben ist, in der auch eine Federbruchsicherung für die Federwelle offenbart ist.

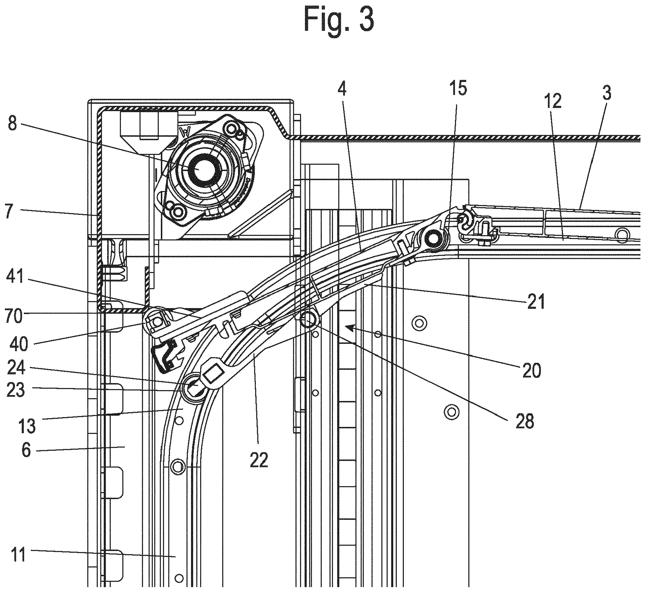

In Figur 3 ist das untere Paneel 4 des Sektionaltores 2 in einer Position kurz vor der maximalen Öffnungsposition gezeigt. Das untere Paneel 4 ist über ein Zugelement, beispielsweise einen Seilzug, das über die Federwelle 8 das Sektionaltor 2 in die Öffnungsposition zieht, zu dem bogenförmigen Abschnitt 13 bewegt worden. Das untere Paneel 4 ist dabei über obere Laufrollen 15 verfahrbar an der Führung 10 gehalten. Im unteren Bereich ist das untere Paneel 4 nicht unmittelbar über eine Laufrolle mit dem bogenförmigen Abschnitt 13 der Führung 10 verbunden, sondern über ein Laufteil 20. Das Laufteil 20 weist einen plattenförmigen Befestigungsabschnitt 21 auf, der an der Innenseite des unteren Paneels 4 fixiert ist, und einen verschwenkbar oder drehbar damit verbundenen Führungsabschnitt 22, an dem eine Laufrolle 23 oder ein Gleitelement fixiert ist. Dadurch kann das untere Paneel 4 relativ zu dem Führungsabschnitt 22 verschwenkt werden, so dass ein unteres Ende des unteren Paneels 4 höher angeordnet ist als ein unteres Ende an dem Führungsabschnitt 22 oder die Laufrolle 23.

An dem unteren Paneel 4 ist auf der bezogen auf den bogenförmigen Abschnitt 13 radial äußeren Seite eine Führungsrolle 40 über einen Halter 41 fixiert, wobei die Führungsrolle 40 an dem Sturz 7 abrollen kann. Über die Führungsrolle 40 wird ein Anschlagen der Außenseite des unteren Paneels 4 an dem Sturz 7 vermieden und gewährleistet, dass das untere Paneel 4 leichtgängig entlang der unteren Kante des Sturzes 7 vorbei bewegt werden kann, auch wenn das untere Paneel 4 dabei eine Schwenkbewegung ausführt. Die Führungsrolle 40 kann optional aus einem elastischen Material hergestellt sein, so dass Stoßkräfte zumindest teilweise absorbiert werden können. Durch das untere Paneel 4 ist dabei über ein Federelement 31 nach oben vorgespannt, um dieses nach Überfahren des Sturzes 7 höher als die Unterkante des Sturzes angeordnet. In der Öffnungsposition ist das untere Paneel 4 mit horizontaler Blickrichtung zu dem Sturz 7 hin hinter dem Sturz 7 angeordnet und steht von diesem nicht nach unten hervor.

An dem unteren Paneel 4 ist auch an einer Innenseite ein Betätigungselement in Form eines Griffes oder einer Schlaufe fixiert, mittels dem das Sektionaltor 2 gegen die Kraft der Federwelle 8 in die Schließposition bewegt werden kann. Wenn der Benutzer an dem Betätigungselement im Wesentlichen in vertikale Richtung zieht, lässt sich das Sektionaltor 2 bewegen, da sich das unterste Paneel 4 im Bereich des bogenförmigen Abschnittes 13 der Führung 10 befindet. Durch Ziehen an dem Betätigungselement kann das untere Paneel 4 relativ zu dem Führungsabschnitt 22 verschwenkt werden, um dann bei Erreichen eines Anschlages das untere Paneel 4 von dem bogenförmigen Abschnitt 13 nach unten zu ziehen. Der Kraftaufwand zum Schließen des Sektionaltores 2 kann somit gering gehalten werden, und zudem kann der Benutzer in gewohnter Weise das unterste Paneel 4 über das Betätigungselement im Wesentlichen nach unten ziehen und muss keine Kraft in horizontale Richtung aufbringen.

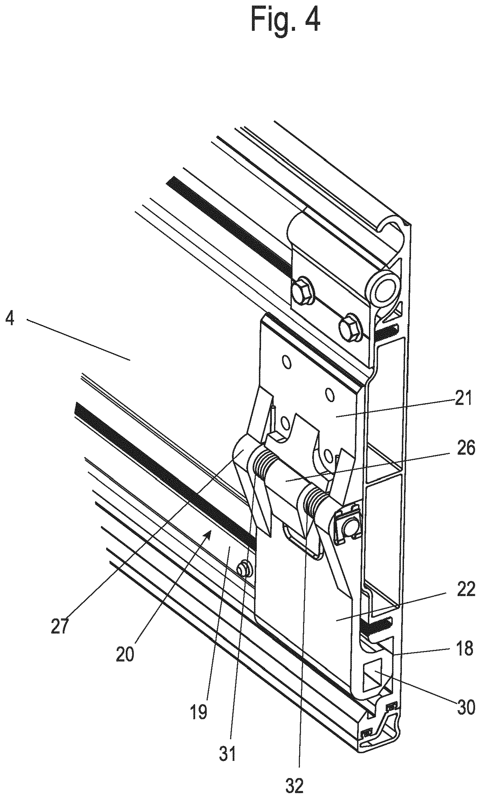

Figur 4 zeigt ein unteres Paneel 4 mit einem Laufteil 20, das einen plattenförmigen Befestigungsabschnitt 21 aufweist, der an dem unteren Paneel 4 fixiert ist. An dem Befestigungsabschnitt 21 ist ein Führungsabschnitt 22 gelenkig gelagert, wobei der im Wesentlichen plattenförmige Führungsabschnitt 22 einen zu dem unteren Paneel 4 hervorstehenden Teil 18 aufweist, an dem eine Öffnung 30 für den Halter 24 (Fig. 3) zum Lagern einer Laufrolle 23 ausgebildet ist. Der hervorstehende Teil 18 ist dabei in einer Nut 19 an dem unteren Paneel 4 angeordnet, so dass die Öffnung 30 zum Einstecken des Halters 24 innerhalb der beiden Ebenen angeordnet ist, die durch eine innere Oberfläche und eine äußere Oberfläche des unteren Paneels 4 definiert werden.

Die Paneele 3 und 4 sind aus einem oder mehreren extrudierten Profilen aus Kunststoff oder Metall hergestellt, so dass die Nut 19 integral ausgebildet ist. Beabstandet von der Nut 19 können eine oder mehrere Hohlkammern vorgesehen sein, so dass die Paneele 4 bei geringem Materialeinsatz eine hohe Stabilität aufweisen. Der Führungsabschnitt 22 ist durch ein Federelement 31 in eine Schwenkrichtung vorgespannt, damit das Laufteil 20 bei Erreichen des bogenförmigen Abschnittes 13 das untere Paneel 4 nach oben verschwenkt.

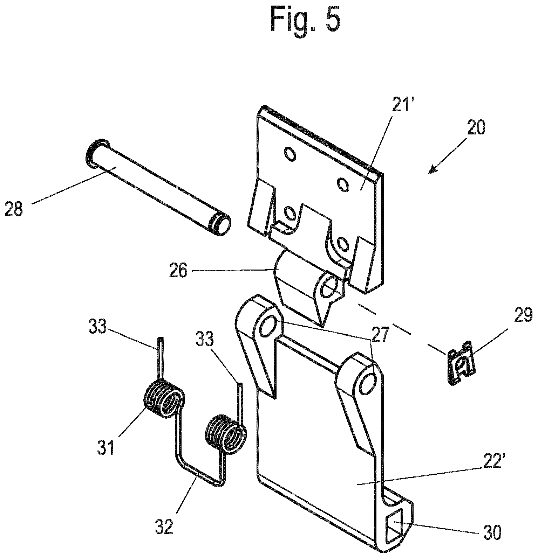

In Figur 5 ist das Laufteil 20 in einer Explosionsdarstellung gezeigt. Der Befestigungsabschnitt 21 umfasst Öffnungen 25 zum Einfügen von Befestigungsmitteln und zur Fixierung an dem unteren Paneel 4. Integral mit dem Befestigungsabschnitt 21 ist eine Hülse 26 ausgebildet, und integral mit dem Führungsabschnitt 22 sind weitere Hülsen 27 ausgebildet, so dass durch die Hülsen 26 und 27 eine Achse 28 durchsteckbar ist, die in axiale Richtung durch ein Sicherungselement 29 gesichert ist. Dadurch sind der Befestigungsabschnitt 21 und der Führungsabschnitt 22 gelenkig miteinander verbunden.

Ferner ist ein Federelement 31 vorgesehen, das mit einem ersten Teil 32 an dem Führungsabschnitt 22 abgestützt ist und mit einem oder mehreren Teilen 33 an dem Befestigungsabschnitt 21. Das Federelement 31 umfasst zwei Abschnitte mit Wicklungen, wobei jeweils ein Abschnitt mit Wicklungen zwischen einer der Hülsen 26 und einer der Hülsen 27 angeordnet ist. Es können zum Vorspannen des Führungsabschnittes 22 relativ zu dem Befestigungsabschnitt 21 aber auch andere Federelemente 31 eingesetzt werden.

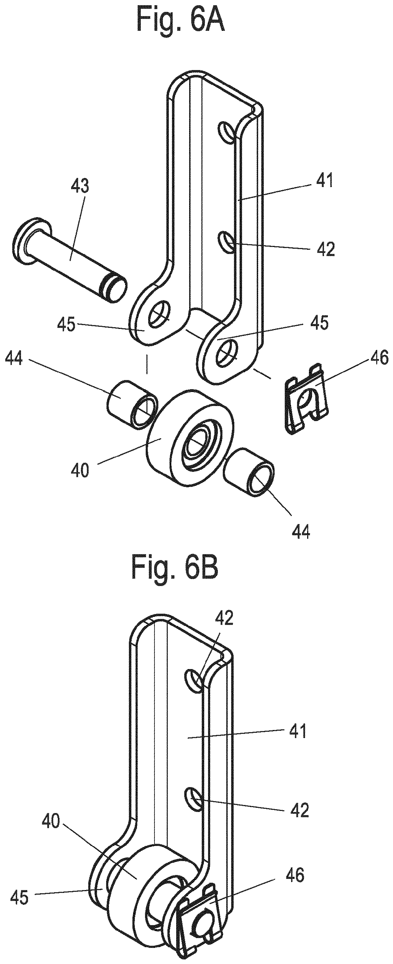

In den Figuren 6A und 6B ist die Führungsrolle 40 mit dem Halter 41 im Detail gezeigt. Der Halter 41 ist aus einem U-förmigen Teil aus Kunststoff oder Metall hergestellt, wobei integral mit dem Halter 41 zwei Stege 45 mit Öffnungen ausgebildet sind, durch die eine Achse 43 durchsteckbar ist. An einem Verbindungsabschnitt zwischen den Stegen 45 sind Öffnungen 42 für Befestigungsmittel vorgesehen, um den Halter 41 an dem unteren Paneel 4 zu fixieren. An der Achse 43 ist die Führungsrolle 40 drehbar gelagert, die über zwei Abstandshalter 44 beabstandet von den Stegen 45 positioniert ist. An der Achse 43 ist ein Sicherungselement 46 montiert, so dass die axiale Bewegung der Achse 43 an den Stegen 45 begrenzt ist.

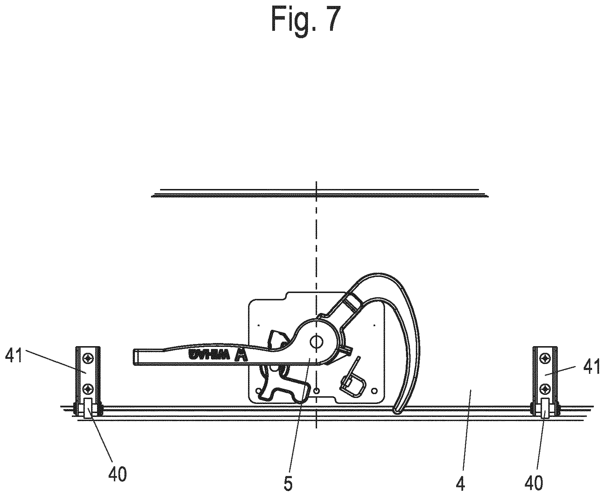

In Figur 7 ist das untere Paneel 4 in einer Draufsicht gezeigt. An dem unteren Paneel 4 können mehrere Halter 41 mit Führungsrollen 40 vorgesehen sein, die beidseits des mittigen Schlosses 5 angeordnet sind. Die Anzahl der Führungsrollen 40 und der Halter 41 kann abhängig von der Länge des unteren Paneels gewählt werden.

In dem dargestellten Ausführungsbeispiel sind die Führungsrollen 40 an dem unteren Paneel 4 gehalten. Es ist auch möglich, die Führungsrollen 40 teilweise oder vollständig an dem Sturz 7 oder Balken drehbar zu lagern, so dass diese an dem unteren Paneel 4 abrollbar sind, wenn dieses an dem bogenförmigen Abschnitt 13 verfahren wird.

### Bezugszeichenliste

- 1: Fahrzeugaufbau
- 2: Sektionaltor
- 3: Paneel
- 4: unteres Paneel
- 5: Schloss
- 6: Pfosten
- 7: Sturz
- 8: Federwelle
- 9: Dach
- 10: Führung
- 11: vertikaler Abschnitt
- 12: horizontaler Abschnitt
- 13: bogenförmiger Abschnitt
- 15: Laufrolle
- 16: Griff
- 17: Seilzuganker
- 18: Teil
- 19: Nut
- 20: Laufteil
- 21: Befestigungsabschnitt
- 22: Führungsabschnitt
- 23: Laufrolle
- 24: Halter
- 25: Öffnung
- 26: Hülse
- 27: Hülse
- 28: Achse
- 29: Sicherungselement
- 30: Öffnung
- 31: Federelement
- 32: Teil
- 33: Teil
- 40: Führungsrolle
- 41: Halter
- 42: Öffnung
- 43: Achse
- 44: Abstandshalter
- 45: Steg
- 46: Sicherungselement

## Patentansprüche

1. Fahrzeugaufbau (1) mit einem zwischen zwei Pfosten (6) angeordneten Sektionaltor (2), das zum Öffnen und Schließen einer Öffnung eines Laderaumes bewegbar ist und eine Vielzahl von verschwenkbar aneinander gelagerten Paneelen (3, 4) aufweist, die an gegenüberliegenden Seiten über Führungsmittel entlang einer Führung (10) bewegbar sind, die im Bereich der Öffnung einen im Wesentlichen vertikalen Abschnitt (11), im oberen Bereich des Laderaums einen im Wesentlichen horizontalen Abschnitt (12) als Speicherabschnitt für das Sektionaltor (2) und dazwischen einen bogenförmigen Abschnitt (13) aufweist, wobei eine Federwelle (8) zum Vorspannen des Sektionaltores (2) in eine Öffnungsposition vorgesehen ist, und ein in der geschlossenen Position bodenseitig angeordnetes unteres Paneel (4) verschwenkbar an einem entlang der Führung bewegbaren Laufteil (20) gehalten ist, wobei die Pfosten (6) im oberen Bereich über einen Sturz (7) oder einen Balken miteinander verbunden sind, **dadurch gekennzeichnet, dass** das untere Paneel (4) an seiner im bogenförmigen Abschnitt (13) radial äußeren Seite eine Führungsrolle (40) aufweist, die an dem Sturz (7) oder Balken an der Oberseite der Öffnung abrollbar ist oder an dem Sturz (7) oder Balken mindestens eine Führungsrolle 40 gehalten ist, die an dem unteren Paneel (4) abrollbar ist, wenn dieses an dem bogenförmigen Abschnitt (13) angeordnet ist.

2. Fahrzeugaufbau nach Anspruch 1, **dadurch gekennzeichnet, dass** über die Länge des unteren Paneels (4) verteilt mehrere Führungsrollen (40) angeordnet oder fixiert sind.

3. Fahrzeugaufbau nach Anspruch 1 oder 2, **dadurch gekennzeichnet, dass** in der geschlossenen Position des Sektionaltores (2) der Sturz (7) oder der Balken oberhalb des Sektionaltores (2) angeordnet ist und das Sektionaltor (2) in einer maximalen Öffnungsposition mit horizontaler Blickrichtung vollständig hinter dem Sturz (7) oder Balken angeordnet ist.

4. Fahrzeugaufbau nach einem der vorhergehenden Ansprüche, **dadurch gekennzeichnet, dass** das Laufteil (20) mit einem Befestigungsabschnitt (21) an dem unteren Paneel (4) fixiert ist und mit einem verschwenkbar an dem Befestigungsabschnitt gehaltenen Führungsabschnitt (22) über eine Laufrolle (23) oder ein Gleitelement an der Führung (10) verfahrbar ist.

5. Fahrzeugaufbau nach einem der vorhergehenden Ansprüche, **dadurch gekennzeichnet, dass** das untere Paneel (4) über ein Federelement (31) in die angehobene Position vorgespannt ist.

6. Fahrzeugaufbau nach Anspruch 5, **dadurch gekennzeichnet, dass** das Federelement (31) mit einem ersten Teil an dem Führungsabschnitt (22) und mit einem zweiten Teil an dem Befestigungsabschnitt (21) des Laufteils (20) abgestützt ist.

7. Fahrzeugaufbau nach einem der vorhergehenden Ansprüche, **dadurch gekennzeichnet, dass** das untere Paneel (4) eine Nut (19) aufweist, in die ein Teil (18) des Führungsabschnittes (22) mit einem Halter (24) für die Laufrolle (23) oder das Gleitelement einfügbar ist.

8. Fahrzeugaufbau nach Anspruch 7, **dadurch gekennzeichnet, dass** in dem Teil (18) eine Öffnung (30) zur Fixierung eines Endes des Halters (24) vorgesehen ist, an dem die Laufrolle (23) drehbar gelagert ist.

9. Fahrzeugaufbau nach Anspruch 7 oder 8, **dadurch gekennzeichnet, dass** das Laufteil (20) einen gestuft ausgebildeten Halter (24) aufweist, in dem eine Laufrolle (23) drehbar gelagert ist.

10. Fahrzeugaufbau nach einem der vorhergehenden Ansprüche, **dadurch gekennzeichnet, dass** an dem unteren Paneel (4) an gegenüberliegenden Seiten jeweils ein Laufteil (20) fixiert ist.

11. Fahrzeugaufbau nach einem der vorhergehenden Ansprüche, **dadurch gekennzeichnet, dass** an dem unteren Paneel (4) ein Zugelement fixiert ist, mit dem das Sektionaltor (2) über die Federwelle (8) in eine Öffnungsposition bewegbar ist.

12. Fahrzeugaufbau nach einem der vorhergehenden Ansprüche, **dadurch gekennzeichnet, dass** die Paneele (4) aus ein oder mehreren extrudierten Profilen mit Hohlkammern gebildet sind.

13. Fahrzeugaufbau nach einem der vorhergehenden Ansprüche, **dadurch gekennzeichnet, dass** in einer Öffnungsposition des Sektionaltores (2) ein unteres Ende des unteren Paneels (4) mindestens 5 mm, insbesondere zwischen 10 mm bis 50 mm, höher angeordnet ist als eine Laufrolle (23) an dem Laufteil (20).

## Claims

1. Vehicle body (1) having a sectional door (2) which is arranged between two posts (6), can be moved to open and close an opening of a loading space and has a plurality of panels (3, 4) which are pivotably mounted on one another and can be moved on opposite sides along a guide (10) via guide means, which has a substantially vertical section (11) in the region of the opening, a substantially horizontal section (12) in the upper region of the loading space as a storage section for the sectional door (2) and an arcuate section (13) therebetween, wherein a spring shaft (8) is provided for pretensioning the sectional door (2) into an opening position, and a lower panel (4) arranged on the floor side in the closed position is held pivotably on a running part (20) movable along the guide, wherein the posts (6) are connected to one another in the upper region via a lintel (7) or a beam, **characterized in that** the lower panel (4) has a guide roller (40) on its radially outer side in the arcuate section (13), which guide roller can be rolled off on the lintel (7) or beam on the upper side of the opening, or at least one guide roller (40) is held on the lintel (7) or beam, which guide roller can be rolled off on the lower panel (4) when this is arranged on the arcuate section (13).

2. Vehicle body according to claim 1, **characterized in that** a plurality of guide rollers (40) are arranged or fixed distributed over the length of the lower panel (4).

3. Vehicle body according to claim 1 or 2, **characterized in that** in the closed position of the sectional door (2), the lintel (7) or the beam is arranged above the sectional door (2) and the sectional door (2) is arranged completely behind the lintel (7) or beam in a maximum opening position with horizontal viewing direction.

4. Vehicle body according to one of the preceding claims, **characterized in that** the running part (20) is fixed to the lower panel (4) by a fastening section (21) and can be moved by a guide section (22) held pivotably on the fastening section via a running roller (23) or a sliding element on the guide (10).

5. Vehicle body according to one of the preceding claims, **characterized in that** the lower panel (4) is pretensioned into the raised position via a spring element (31).

6. Vehicle body according to claim 5, **characterized in that** the spring element (31) is supported with a first part on the guide section (22) and with a second part on the fastening section (21) of the running part (20).

7. Vehicle body according to one of the preceding claims, **characterized in that** the lower panel (4) has a groove (19) into which a part (18) of the guide section (22) with a holder (24) for the running roller (23) or the sliding element can be inserted.

8. Vehicle body according to claim 7, **characterized in that** an opening (30) is provided in the part (18) for fixing one end of the holder (24), on which the running roller (23) is rotatably mounted.

9. Vehicle body according to claim 7 or 8, **characterized in that** the running part (20) has a holder (24) of stepped design, in which a running roller (23) is rotatably mounted.

10. Vehicle body according to one of the preceding claims, **characterized in that** a running part (20) is fixed to the lower panel (4) on opposite sides in each case.

11. Vehicle body according to one of the preceding claims, **characterized in that** a traction element is fixed to the lower panel (4), with which the sectional door (2) can be moved into an opening position via the spring shaft (8).

12. Vehicle body according to one of the preceding claims, **characterized in that** the panels (4) are formed from one or more extruded profiles with hollow chambers.

13. Vehicle body according to one of the preceding claims, **characterized in that,** in an opening position of the sectional door (2), a lower end of the lower panel (4) is arranged at least 5 mm, in particular between 10 mm and 50 mm, higher than a running roller (23) on the running part (20).

## Revendications

1. Structure de véhicule (1) avec une porte sectionnelle (2) disposée entre deux montants (6) qui peut être déplacée pour ouvrir et fermer une ouverture d'un compartiment à marchandises et qui comporte plusieurs panneaux (3, 4) appuyés les uns sur les autres avec possibilité de pivotement, qui peuvent être guidés sur des côtés opposés sur des moyens de guidage le long d'un guide (10) qui présente une partie sensiblement verticale (11) au niveau de l'ouverture, une partie sensiblement horizontale (12) servant de partie de rangement pour la porte sectionnelle (2) dans la région supérieure du compartiment à marchandises et, entre celles-ci, une partie en arc de cercle (13), dans laquelle un axe à ressort (8) est prévu pour précontraindre la porte sectionnelle (2) dans une position ouverte et un panneau inférieur (4) disposé du côté du plancher dans la position fermée est retenu de façon à pouvoir pivoter sur une partie de glissement (20) mobile le long du guide, dans laquelle les montants (6) sont reliés l'un à l'autre dans la partie supérieure par un linteau (7) ou un barreau, **caractérisée en ce que** le panneau inférieur (4) présente dans la partie en arc de cercle (13), sur son côté extérieur dans le sens radial, un galet de guidage qui peut rouler sur le linteau (7) ou le barreau sur le côté supérieur de l'ouverture ou
au moins un galet de guidage (40) est retenu sur le linteau (7) ou le barreau et peut rouler sur le panneau inférieur (4) quand celui-ci se trouve sur la partie en arc de cercle (13).

2. Structure de véhicule selon la revendication 1, **caractérisée en ce que** plusieurs galets de guidage (40) sont répartis et disposés ou fixés sur la longueur du panneau inférieur (4).

3. Structure de véhicule selon la revendication 1 ou 2, **caractérisée en ce que**, quand la porte sectionnelle (2) est en position fermée, le linteau (7) ou le barreau se trouve au-dessus de la porte sectionnelle (2) et la porte sectionnelle (2) dans la position d'ouverture maximale se trouve, vue dans une direction horizontale du regard, entièrement sous le linteau (7) ou le barreau.

4. Structure de véhicule selon l'une des revendications précédentes, **caractérisée en ce que** la partie de glissement (20) est fixée avec une partie de fixation (21) sur le panneau inférieur (4) et peut être déplacée avec une partie de guidage (22) retenue de façon à pouvoir pivoter sur la partie de fixation sur un galet (23) ou un élément de glissement sur le guide (10).

5. Structure de véhicule selon l'une des revendications précédentes, **caractérisée en ce que** le panneau inférieur (4) est précontraint dans la position relevée par un élément à ressort (31).

6. Structure de véhicule selon la revendication 5, **caractérisée en ce que** l'élément à ressort (31) est soutenu par une première partie sur la partie de guidage (22) et par une deuxième partie sur la partie de fixation (21) de la partie de glissement (20).

7. Structure de véhicule selon l'une des revendications précédentes, **caractérisée en ce que** le panneau inférieur (4) présente une gorge (19) dans laquelle peut être introduite une partie (18) de la partie de guidage (22) munie d'une fixation (24) pour le galet (23) ou l'élément de glissement.

8. Structure de véhicule selon la revendication 7, **caractérisée en ce qu'**une ouverture (30) pour la fixation d'une extrémité de la fixation (24) sur laquelle le galet (23) est supporté avec possibilité de rotation est prévue dans la partie (18).

9. Structure de véhicule selon la revendication 7 ou 8, **caractérisée en ce que** la partie de glissement (20) comporte une fixation (24) en gradins, dans laquelle un galet (23) est supporté avec possibilité de rotation.

10. Structure de véhicule selon l'une des revendications précédentes, **caractérisée en ce qu'**une partie de glissement (20) est fixée sur chacun des côtés opposés du panneau inférieur (4).

11. Structure de véhicule selon l'une des revendications précédentes, **caractérisée en ce qu'**un élément de traction, avec lequel la porte sectionnelle (2) peut être amenée dans une position ouverte à l'aide de l'axe à ressort (8), est fixé sur le panneau inférieur (4).

12. Structure de véhicule selon l'une des revendications précédentes, **caractérisée en ce que** les panneaux (4) sont formés d'un ou plusieurs profilés extrudés avec des compartiments creux.

13. Structure de véhicule selon l'une des revendications précédentes, **caractérisée en ce que**, dans une position ouverte de la porte sectionnelle (2), une extrémité inférieure du panneau inférieur (4) est disposée sur la partie de glissement (20) au moins 5 mm, en particulier entre 10 mm et 50 mm, plus haut que le galet (23).
